# EUROPEAN PATENT APPLICATION

(11) **EP 4 020 919 A1**
(43) Date of publication of application: **29.06.2022**
(21) Application number: 22150086.1
(22) Date of filing: 03.01.2022
(51) Int. Cl.: H04L 41/02, G06T 17/00, H04L 41/085, H04L 41/12, H04L 41/14, H04L 41/22, H04W 16/18, G06Q 10/08, H04L 41/0853

(54) **A TELECOM ENTERPRISE MANAGEMENT SYSTEM AND COMPUTER IMPLEMENTED METHOD OF GENERATING SAME**

(30) Priority: 24.12.2020 GB 202020584
(71) Applicant: BIM & Scan Limited, K32HN82 Dublin (IE)
(72) Inventor: Kelly, Stephen, K32 HN82 Dublin (IE); O'Keeffe, Shawn, K32 HN82 Dublin (IE); Dore, Conor, K32 HN82 Dublin (IE)
(74) Representative: O'Connor, Michael Donal

(57) **Abstract**

This invention relates to a computer implemented method of generating a telecom enterprise management system. The method comprises the steps of, for each site in the network, capturing site data including infrastructure data and equipment data. From that captured site data, the method comprises generating a three-dimensional (3D) virtual model of the site; identifying infrastructure components and equipment components in the 3D virtual model; attributing an ISO data model data to each of the equipment components in the 3D virtual model; and storing the ISO data model data for each of the equipment components in the 3D virtual model of the site. In this way, the data will be provided in a reliable, uniform format, that will provide accurate information regarding the equipment in the network and will allow effective planning and management of the network.

## Description

### Technical Field:

This invention relates to a telecom enterprise management system and a computer implemented method of generating a telecom enterprise management system.

### Background Art:

Telecoms networks are in a state of being continuously upgraded to keep up with customer requirements and demand. For example, in the last 30 years, telecoms networks have been significantly upgraded and expanded to cater for the proliferation of mobile telephone use, as larger numbers of consumers transitioned away from traditional land lines to mobile telephones, increasing the bandwidth requirement on the networks. More recently, the telecoms networks have had to undergo further transformational change to facilitate the increased transmission of data across their networks. The advent of 3G, 4G and more recently 5G networks, have required telecom network operators to upgrade and overhaul their infrastructure to cater for the new technology and customer requirements.

As such, the management of the telecoms network has become increasingly complex, arguably at a time when it is most vital. It is becoming increasingly difficult for telecom network operators to accurately track the equipment and infrastructure in their networks. When making a decision as to whether or how to upgrade a given site, management are often working with incomplete or inaccurate data regarding the existing infrastructure and equipment at that site. This leads to inefficiencies and additional costs.

When operating any telecom network, decisions regarding the upgrading of the network have to be made remote from the sites. These decisions will impact the entire supply chain. With millions of sites globally, it is difficult to know with a high degree of accuracy all of the necessary information about any site or group of sites at any given moment. A significant problem experienced by many telecom companies is the fragmentation of the core business operations data due to the global scale of the organisation itself. Different sites will log and categorise their equipment in different ways, leading to uncertainty and difficulty in ascertaining an accurate global picture of the equipment in the networks.

It would be highly advantageous if the data available to management is accurate and in hand when a decision needs to be made about a site or a group of sites. For example, such decisions can be about how much cable to send to a remote site on another continent, or whether a specific antenna can replace an existing one? Can the existing tower structure support the new antenna design load and install requirements? Do the computer CAD models of telecom equipment in the system library match the existing components on site? It would be advantageous if the information that was available could be relied upon.

There are systems and methods known in the art that are used in the telecommunications field. For example, US Patent Application Publication No. US2018/0249343, in the name of Priest et al., describes a system and method for augmented reality add-in of equipment and structures at a telecommunications site. US Patent Application Publication No. US2003/0023412, in the name of Rappaport et al., describes a method and system for modelling and managing terrain, buildings, and infrastructure. US Patent Application Publication No. US2016/0037356, in the name of Bathula et al., describes a network planning tool support for 3D data. However, although useful in their own right, none of the above-mentioned publications discloses a system or method that is directed towards or addresses the specific problems and challenges outlined above.

It is an object of the present invention to provide a telecom enterprise management system and a computer implemented method of generating a telecom enterprise management system that overcome at least some of the problems with the existing systems and methods. It is a further object of the invention to provide a useful choice for the consumer.

### Summary of Invention

According to the invention there is provided a computer implemented method of generating a telecom enterprise management system comprising the steps of, for each site in the telecom enterprise:
capturing site data including infrastructure data and equipment data;
generating a three-dimensional (3D) virtual model of the site from the captured site data;
identifying infrastructure components and equipment components in the 3D virtual model;
attributing an ISO data model data to each of the equipment components in the 3D virtual model; and
storing the ISO data model data for each of the equipment components in the 3D virtual model of the site in an accessible memory.

By having such a method, it is possible to accurately capture data relating to any given site including data relating to the infrastructure and equipment that is actually present on site. Standardized, accurate information about that infrastructure and equipment may then be gathered and stored for subsequent use. Telecom industry data is captured and structured using an ISO standard data model schema to eliminate the fragmentation and redundancy of data, whilst ensuring the integrity of the data. The data from multiple sites may be collated together so that a global view of the network infrastructure and equipment may be obtained. Network operators will now be able to make rule-based queries of the available data regarding the equipment in their network, located at one or multiple sites, and can generate a bill of materials or a bill of quantities if they should require them. The network operators will be provided with accurate, reliable data on which they may base their decisions.

In one embodiment of the invention there is provided a computer implemented method of generating a telecom enterprise management system in which the method comprises the intermediate step of generating a Building Information Model (BIM) for the site.

In one embodiment of the invention there is provided a computer implemented method of generating a telecom enterprise management system in which the ISO data model comprises an ISO Industry Foundation Classes (IFC) data model. This is seen as a particularly preferred embodiment of the invention as this will provide a recognized standardized data model that will be compatible with different user BIM systems and software.

In one embodiment of the invention there is provided a computer implemented method of generating a telecom enterprise management system in which the ISO IFC data model comprises an ISO 16739 IFC data model schema. This is seen as a useful way of ensuring all of the data is machine readable and uniform for subsequent manipulation and processing.

In one embodiment of the invention there is provided a computer implemented method of generating a telecom enterprise management system in which the ISO 16739 IFC data model schema is designed using an Information Delivery Manual (IDM) methodology according to ISO 29481-1.

In one embodiment of the invention there is provided a computer implemented method of generating a telecom enterprise management system in which the ISO 16739 IFC data model schema is in ISO 10303-21 STEP format. ISO 10303-21 allows IFC data to be in STEP Physical File Format (SPFF) which is the most common way to exchange IFC data. SPFF is understood to be the IFC format most familiar to engineers/draftsman. In relation to quality assurance and control of data, SPFF is a common medium for manual and automated checking of data. Although, there are other ISO 10303 STEP parts that afford similar when using IFC, e.g. Parts 26 & 28. It is envisaged that over time ISO 10303-28 will become more common as technology in engineering becomes more advanced. Similarly, the ISO 16739 IFC is currently based on the EXPRESS data modelling language, but is in the process of converting to the more future friendly Unified Modelling Language (UML).

In one embodiment of the invention there is provided a computer implemented method of generating a telecom enterprise management system in which the data model includes Construction Operations Building information exchange (COBie) data. COBie is a subset of ISO 16739 data particularly for an organisation's assets. It is utilised for the organisation of an owner's assets, the structuring of asset data, quality control of the data related to the assets, and the sharing of asset data, both in virtual models and otherwise. In layman's terms, this is how asset data is to be structured for storing and querying building assets over time. Due to the fact that the full IFC data model is not used at any given time, it is possible to use portions for specific use case, COBie satisfies the uses case related to owner assets. More specifically, COBie relates solely to building facility assets, such as pumps, valves, windows, doors, etc., which are "maintainable assets". COBie is an ISO IFC based international standard, i.e. model view definition (MVD), that is meant to be contracted on building facility projects, because it includes a lean handover methodology for capturing asset related data at the moment the data is created, e.g. users get design related COBie data for engineering drawing schedules, while during construction users get COBie data from the personnel installing the equipment for the very first time. COBie data also has various machine-readable formats for integrating with Content Management and Maintenance Systems (CMMS).

By inputing COBie data directly into CMMSs such as IBM Maximo, facility data that is utilised to maintain a given building is immediately ready and at steady state for operations, where traditionally this data takes man years to collate using traditional methods such as walking sites, manually writing it down and trial and error of typing it into systems like Maximo. This COBie data is also used for automating operation and maintenance via automated work orders. For example, forecasting when to change a light, or fan belt and the like. In short, COBie is about equipment in spaces. COBie specifies the minimum set of data within the overall IFC data model for the operations of a building. In the same way, telecom site data can be captured and structured. This is further explained below.

In one embodiment of the invention there is provided a computer implemented method of generating a telecom enterprise management system in which the data model includes Telecom Lifecycle information exchange (TLie) data.

Similar to COBie, TLie is the minimum set of data within the overall IFC data model for a telecom site. One site at a time, the invention enables the same benefits as COBie does for buildings. TLie is inclusive of some of COBie. Those aspects, or more specifically object entity types and attributes, of COBie that are inclusive on a telecom site, e.g. doors, electrical panels, etc. are included in the TLie model view definition (MVD). The TLie MVD explicitly further excludes non utilised COBie entities, whilst all including the entity types needed for Telecom sites that are not included in the COBie MVD. While this may seem complex, this is exactly how IFC is used in practice for the built environment, and telecom sites are no different. However, to date, the telecom industry has lacked IFC, and holistic semantic data models in general. The main advantage of TLie is for focusing on telecom related assets only. This is the way to explicitly organise telecom related objects, while ignoring those entity type objects that are totally unrelated to the average telecom site. Furthermore, TLie also further includes core business building information modelling needs such as 3D geometry, structural analysis, etc., where COBie on the other hand explicitly excludes such MVD requirements. Similar to COBie, TLie enables automated verification and validation of the telecom specific data within TLie formatted information and models.

In one embodiment of the invention there is provided a computer implemented method of generating a telecom enterprise management system in which the step of identifying infrastructure components and equipment components in the 3D virtual model comprises:
comparing a PC of the site with an IFC model of the site;
integrating the PC with the IFC model;
identifying equipment components in the PC by determining data points in the PC that correspond to an object in the IFC model; and
generating a semantic point cloud, the semantic point cloud comprising those data points in the PC that correspond to an equipment component in the IFC model.

This is seen as a useful way of identifying the infrastructure and the equipment components in the 3D virtual model. Furthermore, this will allow the operator to validate the equipment on site and compare it with the IFC model of the site, determine the accuracy of the IFC model and identify any changes to the site since the IFC model was generated.

In one embodiment of the invention there is provided a computer implemented method of generating a telecom enterprise management system in which the step of capturing site data comprises receiving a point cloud (PC) generated by a laser scan of the site. This is seen as a particularly useful aspect of the present invention. The PC may be used to accurately map the equipment at the site and allow the position, size and type of equipment to be ascertained.

In one embodiment of the invention there is provided a computer implemented method of generating a telecom enterprise management system in which the step of capturing site data comprises receiving at least one photograph of the site. This is seen as another useful way in which the data may be captured.

In one embodiment of the invention there is provided a computer implemented method of generating a telecom enterprise management system in which the at least one photograph of the site comprises a photograph captured by a drone-mounted camera. This is seen as a particularly useful aspect of the present invention. By using a drone photograph, it is possible to access remote sites without having to send service personnel to perform manual checks. It will also be possible to dispatch a drone and quickly obtain the results for further analysis.

In one embodiment of the invention there is provided a computer implemented method of generating a telecom enterprise management system in which the photograph is processed using photogrammetry, and a synthetic point cloud PC is generated from the photograph. This is seen as a useful way of manipulating the photograph so that it may then be processed in a manner similar to the PC from the laser scanner, standardizing and simplifying the process.

In one embodiment of the invention there is provided a computer implemented method of generating a telecom enterprise management system in which the step of capturing site data comprises receiving manual survey data of the site. The manual survey data may be retrieved in the form of a pdf document or similar file structure and provided as an input into the system.

In one embodiment of the invention there is provided a computer program product having program instructions stored thereon that when operated on a computer, cause the computer to carry out the method of any one of the computer implemented method claims.

### Brief Description of the Drawings:

The invention will now be more clearly understood from the following description of some embodiments thereof given by way of example only with reference to the accompanying drawings, in which:-
Figure 1 is a diagrammatic representation of the system processing laser scan data;
Figure 2 is a diagrammatic representation of the system processing manual site survey data;
Figure 3 is a diagrammatic representation of the system processing drone-captured photographic data;
Figure 4 is a diagrammatic representation of the system according to the invention;
Figure 5 is a diagrammatic representation of the IFC data model used in the method according to the invention; and
Figure 6 is another diagrammatic view of the system according to the invention.

### Detailed Description of the Drawings:

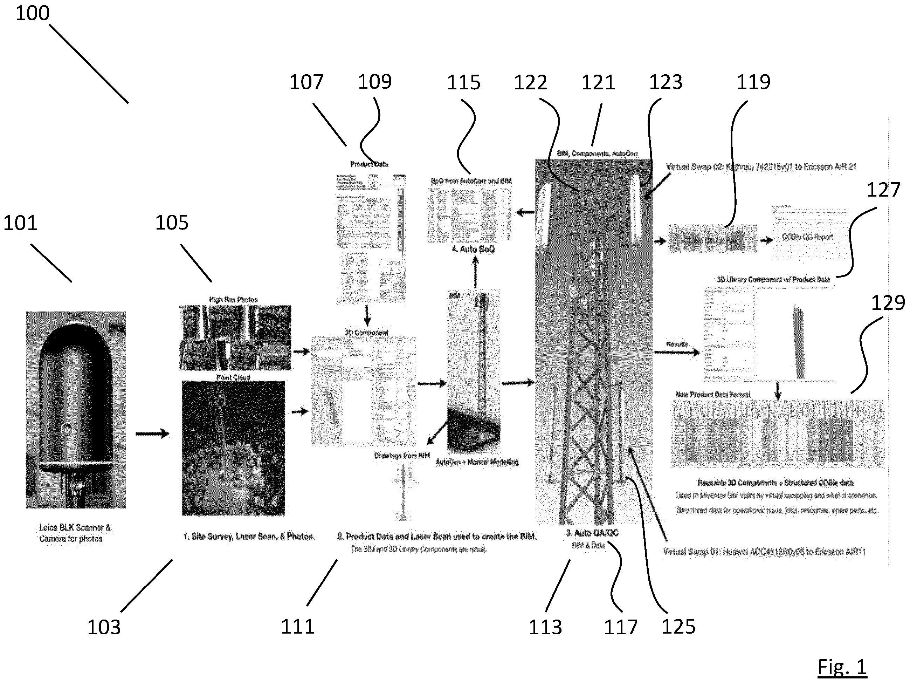

Referring to Figure 1, there is shown a diagrammatic representation of the system and computer implemented method for generating a telecom enterprise management system according to the invention, indicated generally by the reference numeral 100. The method comprises a plurality of distinct stages, starting with a data capture stage 101. A laser scanner 101 is used to survey a site and generate a point cloud (PC) 103 of the site. In addition to the PC, one or more high resolution photos 105 may be provided. In step 107, the PC, high resolution photos and any available product data 109 for the site, in this case provided by way of .pdf documents that may be provided as an input into the system, are used to generate a Building Information Modelling (BIM) product for the site.

In order to generate the BIM product, the PC and, if available, the high resolution photos are used to generate a three-dimensional (3D) virtual model 111 of the site from the captured site data, identify infrastructure components and equipment components in the 3D virtual model. The method then entails attributing an ISO data model data to each of the equipment components in the 3D virtual model using any product data 109 available and/or records of component properties stored in memory. The ISO data model data for each of the equipment components in the 3D virtual model of the site are then stored in an accessible memory 113.

Once the ISO data model data is stored in memory 113, the model may be queried to generate files/reports, such as, but not limited to, a Bill of Quantities (BoQ) file/report 115, a Quality Assurance (QA) and/or a Quality Control (QC) files/reports 117, Construction Operations Building information exchange (COBie) files/reports 119.

It can be seen in this environment, the operator will be provided with a graphical representation 121 of the site on their graphical user interface (not shown) including the site infrastructure, in this case a mast 122, and site equipment, in this case provided by two types of antennae 123, 125 mounted on the mast. The operator will have access to a 3D library of components with product data 127 with product data structure in a suitable (i.e. uniform for all equipment) file format 129, which is in this particular case ISO 16739 IFC data in an ISO 10303-28 XML formatted XLXS STEP physical file. In this way, the operator may carry out virtual swaps of different antennae for the existing, or add antennae or other equipment to the virtual model to see the effect and whether it is feasible to do so.

In the embodiment shown, there is shown a point cloud (PC) input to the system via a laser scanning methodology. The computer implemented method processes in PC, photos, and product data. The PC is in e57 format, the photos are in JPG format, and the product data is provided as a PDF. Telecom site 3D components are then generated from the inputs, and a BIM is generated for a full telecom site, whilst the automated data entry is according to a TLie MVD specification (as will be described in more detail below), and this data is verified to assure its formatting is correct (e.g. a date must be according to ISO 8601 for the date and time format, explicitly), and the same data is then validated against the product data in the PDF to assure the data is correct.

Once this is done, the AutoDiscovery subsystem processes the e57 point cloud and BIM in IFC format, to produce AutoBoQ and the generation of 3D component to site matches within a report. The computer implemented method generates reports in CSV and BCF format, but the invention is not limited to generate these reports or to use these formats. The AutoDiscovery subsystem automatically detects if components on site match components within an existing or new design; or match with components not in any design but within a library. The computer implemented method uses a correspondence detection technique but is not limited to this type of object recognition. Site asset data in IFC format and the full 3D BIM of the telecom site is then the resulting output. In the example shown, the computer implemented method utilises the ISO IFC data model.

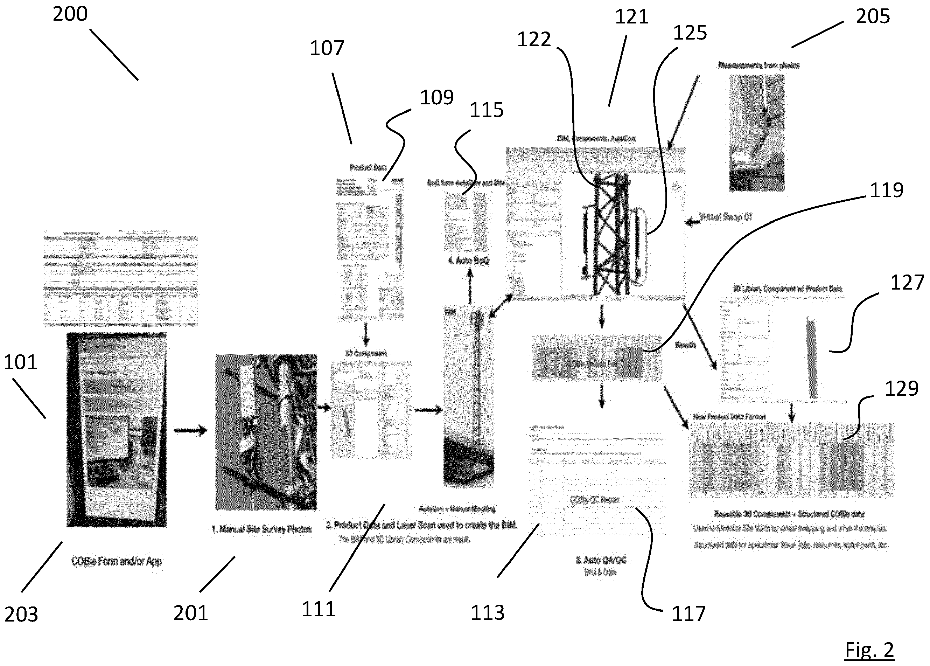

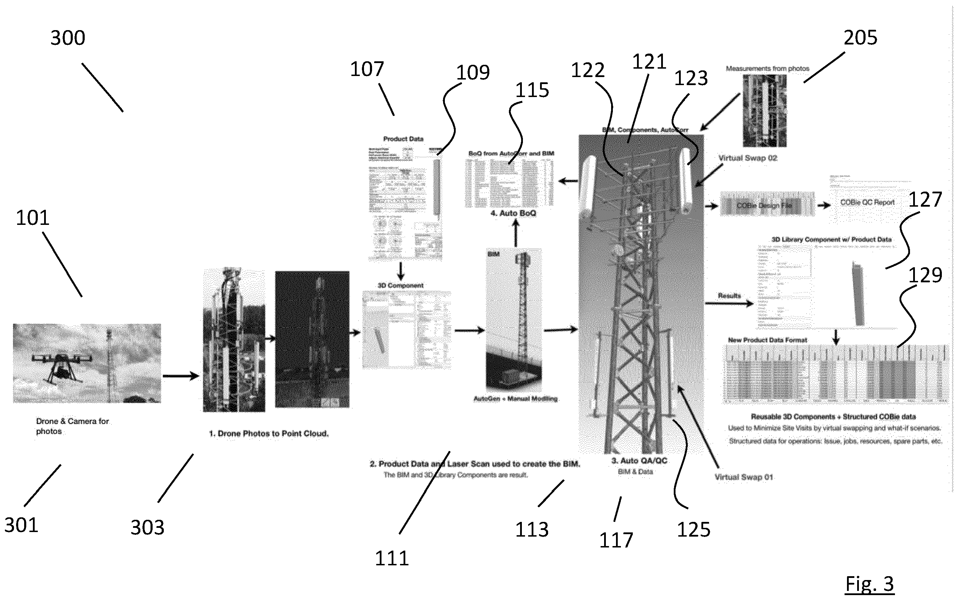

Referring now to Figures 2 and 3, there are shown graphical representations of alternative computer implemented methods for generating a telecom enterprise management system according to the invention, indicated generally by the reference numeral 200 and 300 respectively, where like parts have been given the same reference numerals as before.

Referring first of all to Figure 2, there is shown a diagrammatic representation of the method 200 in which manual site survey data 201 is used in the generation of the 3D virtual model 111. The site survey data may be gathered using a suitable app 203 on a hand held device such as, but not limited to, a tablet or smart telephone. The site survey data may also be taken by simply using a camera. In this case, the manual site survey comprises capturing a number of photos captured by a camera and uploading those photos, along with product data 109 to the system for generation 107 of a 3D virtual model. In this instance, validation based on true to scale photographs 205 may be used to validate the measurements of the 3D objects created from the product data. Again, an ISO data model with 3D virtual model and associated equipment data is produced.

As outlined above, in the embodiment shown in Figure 2, there is shown a manual site survey data entry using photos as input to the system via a mobile tablet methodology. The photos may be captured by a variety of different devices including, but not limited to, a mobile telephone, a digital camera, a tablet or other device. The computer implemented method processes in the photos and product data, i.e. photos in JPG format, and the product data in PDF format. Figure 2 is different than Figure 1 because it does not contain a PC. Also, when using only photo inputs, in this computer implemented method the AutoDiscovery subsystem is not triggered, however, the invention does provide a manner of image recognition to do similar. For example, like in Figure 3 below, the photos can be processed using photogrammetry to further create a synthetic point cloud (PC) input to the system. If the invention is used in this way with photos only, then the AutoDiscovery could be triggered and utilised within the data capture subsystem. Telecom site 3D components are then generated from the inputs and a BIM is generated for a full telecom site, whilst the automated data entry is according to the TLie MVD specification, and this data is verified to assure its formatting is correct, i.e. so machines can read it (e.g. a date must be according to ISO 8601 for the date and time format, explicitly), and the same data is then validated against the product data in the PDF to assure the data is correct. Site asset data in IFC format and the full 3D BIM of the Telecom site is the resulting output. The computer implemented method also utilises the ISO IFC data model.

Referring to Figure 3, there is shown a diagrammatic representation of the method 300 in which photographs captured by a drone 301 are used in the generation of the 3D virtual model 111. The drone photographs are first transferred into a PC and the PC is then used to generate a 3D virtual model 111 as before. Similar to Figure 2, validation based on true to scale photographs 205 may be used to validate the measurements of the 3D objects created from the PC. Again, an ISO data model with 3D virtual model and associated equipment data is produced.

In this embodiment, the drone data is in the form of photos, and the photos using photogrammetry are utilised to create a synthetic point cloud (PC) input to the system. The computer implemented method processes in PC, photos, and product data. PC in e57 format, photos in JPG (or like) format, and the product data in PDF (or like) format. Telecom site 3D components are then generated from the inputs, and a BIM is generated for a full telecom site, whilst the automated data entry is according to the TLie MVD specification, and this data is verified to ensure the data is in the correct format. The data is then validated against the product data in the PDF to ensure the data is correct. Next, the AutoDiscovery subsystem processes the e57 point cloud and BIM in IFC format, to produce AutoBoQ and the generation of 3D component to site matches within a report. The computer implemented method generates reports in CSV and BCF format. Site asset data in IFC format and the full 3D BIM of the telecom site is output. Again, the computer implemented method utilises the ISO IFC data model to good effect.

In some of the embodiments described, the system runs/computes based on a minimum requirement of one scan pose. However, the user could run as many single pose point clouds as they wish, in any location in the environment, that is required to validate the full structure. While a single scan pose in not necessarily optimal, and indeed the more painstaking and time consuming approach, it is not however a limitation of the invention. It is envisaged that drone data and other techniques may afford more than one scan position, and these can be used to good effect.

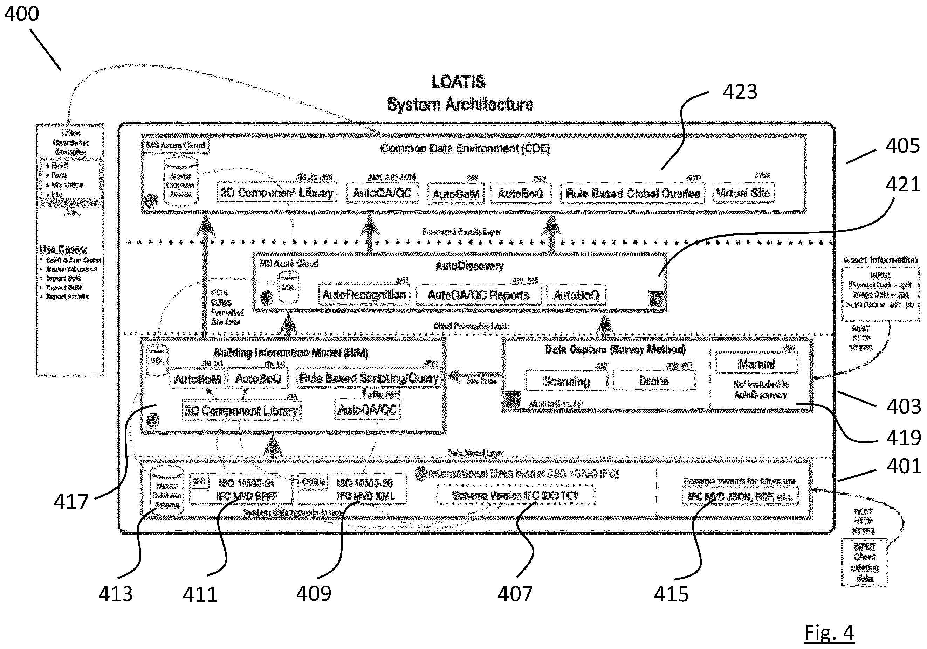

Referring now to Figure 4, there is shown a diagrammatic representation of the system architecture according to the present invention, indicated generally by the reference numeral 400. The system effectively comprises three layers. A base, data model layer 401, an intermediate, data processing layer 403 and a top, processed results layer 405.

The base data model layer 401 comprises an ISO 16739 IFC data model schema 407, COBie MVD file format 409, IFC MVDs file format 411 and master database schema 413. There is provided for the possibility of additional IFC MVD formats 415 in due course. Existing Client data may be input into the base data model layer. It should now be mentioned that as IFC changes into the future, e.g. the aforementioned EXPRESS versus UML conversion, that MVD and Information Delivery Specification (IDS) have equal meanings are interchangeable in the event one is to utilise this invention proclaiming utilisation of IDS over MVD, especially when using the IFC5 data model schema in the future as the term MVD may be phased out or become obsolete over time.

The intermediate, data processing layer 403 comprises a BIM component 417, a data capture (survey) component 419, and an AutoDiscovery component 421. The BIM component in turn comprises an SQL database, an AutoBoM component, an AutoBoQ component, a Rule based scripting query component, a 3D component library, and an AutoQA/QC component. The data capture (survey) component 419 in turn comprises a scanning component, a drone component and a manual data input component each for receipt of site data in a specific format. The data may be provided in, for example, .pdf format (manual data), .jpg format (photographs) or e57 format (Point cloud). The AutoDiscovery component 421, in this case implemented using Microsoft (Registered Trade Mark, ^{®}) Azure ^{®} cloud services, comprises an SQL database, an AutoRecognition component for detecting certain equipment from the 3D virtual models of that equipment, an AutoQA/QC report component, and an AutoBoQ component.

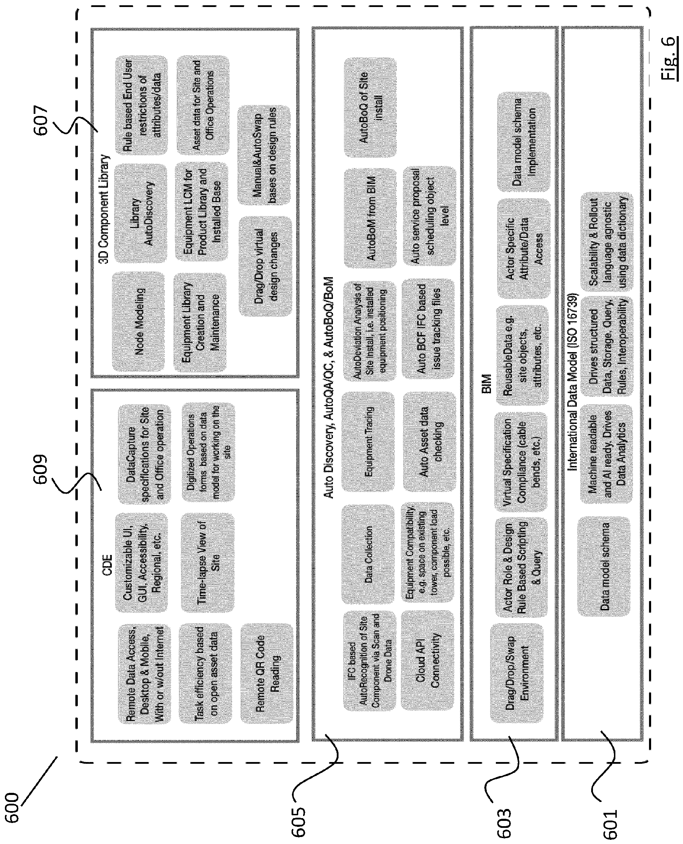

The top, processed results layer is the common data environment (CDE) that provides access to the data and models by the users, effectively the user interface with the data and the data models. The processed result layer is again implemented in this instance using Microsoft ^{®} Azure ^{®} cloud services, comprises a database, a 3D component library, an AutoQA/QC component, an AutoBoM component, an AutoBoQ component, a Rule Based Global Queries component, and a virtual site component. The cloud-based CDE has a dashboard GUI that is customisable based on the specific company and/or user needs, e.g. specific actors only require certain information and this data is segregated via a synergy between proper use of the overall data model, and cloud defined access rights. Referring to Figure 6, there is shown an alternative representation of the system, indicated generally by the reference numeral 600, and system components, including a base, international data model ISO 16739 layer 601, a BIM layer 603, an AutoDiscovery, AutoQA/QC and AutoBoQ/BoM layer 605, a 3D component library 607 and a CDE layer 609. The CDE layer 609 is where the data is accessed and stored, the 3D Component Library 607 is a collation of all 3D virtual object generated by the invention, The AutoDiscovery subsystem 605 is an object recognition module, the BIM subsystem 603 is for generating 3D virtual components and the like from the input data, and the bottom/base layer 601 is the foundation containing the data model and ability to support all upstream data flow using the TLie MVD and overall ISO 16739 IFC data model schema.

As outlined above in relation to Figures 4 and 6, The invention consists three main subsystems: Data capture method, BIM, and AutoDiscovery. These three core systems in the computer implemented method, are stored locally on any given computer and operating system, but the invention is not limited to this structure, e.g. these subsystems could be, for example, in the cloud. The bottom layer is the control of the system, i.e. data model, and the top layer is a novel dashboard that enable access to all system outputs via the cloud.

One purpose of the subsystems are to allow different data inputs into the system whilst achieving the same desired result. To date there are no systems that allow this. For example, the invention allows for laser scan, drone, and photographic based data to enter the system and then be converted into 3D virtual products and the automatic recognition of these products if they are installed on site, and furthermore embed ISO standard based telecom specific semantic data into these 3D objects that in turn allow automatic bill of quantities and bill of materials, automatic product data checking and site analyses, rule based enterprise querying, and the like.

Another purpose of the invention is the flexibility to change components within the subsystems. For example, the computer implemented method uses a specific BIM application, laser scanner and software, and object recognition solution, however, all of these components within these subsystems can be replaced with other chosen component/tool/application. In the example shown, the computer implemented method utilises Autodesk Revit as the BIM application, but this application can be replaced directly with Graphisoft's Archicad, Bentley AECOM, or other compatible BIM application. What makes this possible is the bottom layer of the systems, which is the ISO 16730 IFC data model schema of which the entire system/invention is built.

An important aspect of the invention that enables this swap from one subsystem component to another, is how the invention explicitly uses the ISO IFC data model schema in a novel way, i.e. the invention operates on a telecom specific ISO 16739 IFC model view definition (MVD) that was designed specifically for the entire telecom industry by the inventors of the present invention utilising an IDM methodology according to ISO 29481-1. The invention operates a telecom MVD in ISO 10303-21 STEP format. However, the invention can swap this format with any other format that shall conform to the ISO 16739 data model, as per defined in this standards implementation specification.

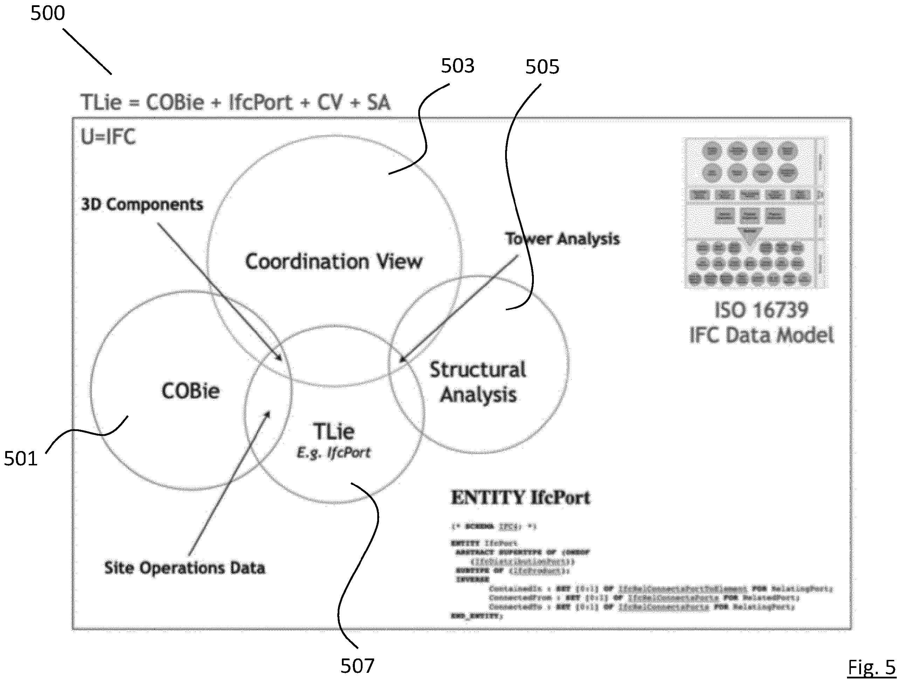

Referring to Figure 5, there is shown a diagrammatic representation of the Industry Foundation Classes (IFC) data model based on ISO 16739, indicated by the reference numeral 500, and the components and data represented thereby, including the interaction and overlap of the different data. The data model includes COBie 501, coordination view data 503, structural analysis 505, and TLie data 507.

Various modifications to the apparatus and methodologies can be made to the embodiments described above without departing from the invention. For example, throughout the specification, reference is made to laser scanning, the laser scanning method can be conducted with several different types of laser scanning hardware. The computer implemented method of the invention utilises a terrestrial laser scanner. Other scanners include but not limited to, aerial based scanners, handheld scanners, and the like.

The BIM system generates 3D virtual geometric models, i.e. 3D Components, with ISO 16739 IFC structured data for telecom purposes. Data is inclusive of COBie formatted data for design, build, and operation phases of a telecom project life cycle. Data outside the scope of COBie is also formatted according to the ISO IFC data model schema. In this specification, this data is referred to as TLie data. TLie is the Telecom Lifecycle information exchange model view definition (MVD) for the exchange of telecom specific data. This MVD is a telecom-based subset of the IFC data model. Unless otherwise specified in the claims, it is intended that the invention is not limited solely to the TLie MVD. TLie is simply an example computer implementing method to derive the expected results when implementing the invention.

In the embodiments described, the system outputs can include one or more of: (i) 3D digital twins with IFC formatted data; (ii) 3D semantic rich model components and full site model with structured reliable data; (iii) AutoBoQ files and reports for assessing asset quantities; (iv) AutoBoM files and reports for assessing asset material; (v) Rule based queries (Note: in the embodiment shown, these were from the BIM design authoring application, in this case the computer implemented method used Dynamo ^{®}, produced by Autodesk; (vi) Virtual Site model with geolocation, web viewer, images of assets embedded; (vii) AutoQA/QC files and reports. In the present examples, the computer implemented method used Faro Scene, and Faro Webshare hosted on MS Azure cloud.

Throughout the specification, reference is made to how the invention creates IFC coordination models directly from the point cloud, and how the models are formatted using ISO 10303 Part 21, i.e. STEP Physical File Format (SPFF). More specifically, the computer program product creates IFC2X3TC1 Coordination Model View Definition (MVD) files using the IFC Schema Version 2X3TC1 and the Coordination View 2.0 MVD (CV 2.0 MVD). However, the invention is not limited to IFC model creation in SPFF, nor this particular schema and MVD versions. For example, IFC4 (e.g. IFC4.3 RC1, etc.), IFC5 (e.g. IFC5.0.1 or IFC5.1.0, etc.), and future ISO 16739 data models and schema versions are optional to IFC2X3TC1, and the invention is intended to cover the case where the MVD concept may be eliminated or replaced with alternative sub-set schema definitions and alternative exchange mechanisms because the invention is not bound by the MVD concept, e.g. the aforementioned IDS may become the norm in the near future.

Any format can be used as long as it conforms to the ISO 16739 IFC data model standard specification as per stated in the standard itself. Some examples are ISO 10303 Parts 26 and 28, and outside of the ISO 10303 STEP family formats such as ifcXML, ifcJSON, Turtle, RDF and ifcOWL. Said alternative IFC formats are inclusive of web based exchange of IFC model data warranting the invention to be not limited to file based exchanges on personal computers, of which at this moment in time, due to vendor adoption of said standards, ISO 10303 Part 21 is the predominant format chosen for the exchange of IFC data. The invention is also not limited to the IFC2X3 CV 2.0 MVD, it is utilized in the computer program product at this time due to wide support of the IFC2X3 schema. In fact, the computer program product can read and write using any IFC Schema, e.g. the creation of an IFC4 Design Transfer View MVD model, which is envisaged to be the next most supported MVD by vendors for the editing of parametric models in IFC format and is suited most for the next version of the inventions computer program product. Throughout the specification, reference is made to the E57 ASTM Standard format. However, the present invention is not dependent on the E57 format. For example, other formats could be used such as the PC formats PTX, LAS, FLS, XYZ, and the like.

It will be understood that the invention further extends to a computer program product having program instructions for the computer implemented method. Furthermore, the invention further extends to a dedicated computing device programmed for carrying out the computer implemented method. The computing device may be a mobile phone, a so-called smart phone, a tablet, a phablet, a laptop, a personal computer or other device capable of processing the data in the manner described.

It will be further understood that various parts of the present invention may be performed in hardware and other parts of the invention may be performed either in hardware and/or software. It will be understood that the method steps and various components of the present invention will be performed largely in software and therefore the present invention extends also to computer programs, on or in a carrier, comprising program instructions for causing a computer or a processor to carry out steps of the method or provide functional components for carrying out those steps. The computer program may be in source code format, object code format, or a format intermediate source code and object code. The computer program may be stored on or in a carrier, in other words a computer program product, including any computer readable medium, including but not limited to a floppy disc, a CD, a DVD, a memory stick, a tape, a RAM, a ROM, a PROM, an EPROM or a hardware circuit. In certain circumstances, a transmissible carrier such as a carrier signal when transmitted either wirelessly and/or through wire and/or cable could carry the computer program in which cases the wire and/or cable constitute the carrier.

It will be further understood that the present invention may be performed on two, three or more devices with certain parts of the invention being performed by one device and other parts of the invention being performed by another device. The devices may be connected together over a communications network. The present invention and claims are intended to also cover those instances where the system and/or method is operated across two or more devices or pieces of apparatus located in one or more locations. The locations may be in the same, or different, jurisdictions.

In this specification the terms "comprise, comprises, comprised and comprising" and the terms "include, includes, included and including" are all deemed totally interchangeable and should be afforded the widest possible interpretation. The invention is not limited to the embodiments hereinbefore described but may be varied in both construction and detail within the scope of the appended claims.

## Claims

1. A computer implemented method of generating a telecom enterprise management system (100) comprising the steps of, for each site in the telecom enterprise:
capturing site data (101) including infrastructure data and equipment data;
generating (107) a three-dimensional (3D) virtual model (111) of the site from the captured site data;
identifying infrastructure components and equipment components in the 3D virtual model;
attributing an ISO data model data (127) to each of the equipment components in the 3D virtual model; and
storing the ISO data model data for each of the equipment components in the 3D virtual model of the site in an accessible memory (113).

2. A computer implemented method of generating a telecom enterprise management system (100) as claimed in claim 1 in which the method comprises the intermediate step of generating a Building Information Model (BIM) for the site.

3. A computer implemented method of generating a telecom enterprise management system (100) as claimed in claim 1 or 2 in which the ISO data model comprises an ISO Industry Foundation Classes (IFC) data model.

4. A computer implemented method of generating a telecom enterprise management system (100) as claimed in claim 3 in which the ISO IFC data model comprises an ISO 16739 IFC data model schema (407).

5. A computer implemented method of generating a telecom enterprise management system (100) as claimed in claim 4 in which the ISO 16739 IFC data model schema (407) is designed using an IDM methodology according to ISO 29481-1.

6. A computer implemented method of generating a telecom enterprise management system (100) as claimed in claim 4 in which the ISO 16739 IFC data model schema (407) is in ISO 10303-21 STEP format.

7. A computer implemented method of generating a telecom enterprise management system (100) as claimed in any preceding claim in which the data model includes Construction Operations Building information exchange (COBie) data (119).

8. A computer implemented method of generating a telecom enterprise management system (100) as claimed in any preceding claim in which the data model includes Telecom Lifecycle information exchange (TLie) data.

9. A computer implemented method of generating a telecom enterprise management system (100) as claimed in any preceding claim in which the step of identifying infrastructure components and equipment components in the 3D virtual model (111) comprises:
comparing a PC (103) of the site with an IFC model of the site;
integrating the PC with the IFC model;
identifying equipment components in the PC by determining data points in the PC that correspond to an object in the IFC model; and
generating a semantic point cloud, the semantic point cloud comprising those data points in the PC that correspond to an equipment component in the IFC model.

10. A computer implemented method of generating a telecom enterprise management system (100) as claimed in any preceding claim in which the step of capturing site data comprises receiving a point cloud (PC) (103) generated by a laser scan of the site.

11. A computer implemented method of generating a telecom enterprise management system (100) as claimed in any preceding claim in which the step of capturing site data comprises receiving at least one photograph (205) of the site.

12. A computer implemented method of generating a telecom enterprise management system (100) as claimed in claim 11 in which the at least one photograph of the site comprises a photograph captured by a drone-mounted camera.

13. A computer implemented method of generating a telecom enterprise management system (100) as claimed in claim 11 or 12 in which the photograph is processed using photogrammetry, and a synthetic point cloud PC is generated from the photograph.

14. A computer implemented method of generating a telecom enterprise management system (100) as claimed in any preceding claim in which the step of capturing site data comprises receiving manual survey data (201) of the site.

15. A computer program product having program instructions stored thereon that when operated on a computer, cause the computer to carry out the method of any one of claims 1 to 14 inclusive.
